# EUROPÄISCHE PATENTSCHRIFT

(11) **EP 3 581 815 B1**
(45) Veröffentlichungstag und Bekanntmachung des Hinweises auf die Patenterteilung: **04.08.2021**
(21) Anmeldenummer: 18176977.9
(22) Anmeldetag: 11.06.2018
(51) Int. Cl.: F16C 1/10, E03C 1/23, F16C 1/16, F16C 1/22, E03C 1/28

(54) **BOWDENZUGAKTUATOR**
BOWDEN CABLE ACTUATOR
CÂBLE BOWDEN ACTIONNEUR

(43) Veröffentlichungstag der Anmeldung: 18.12.2019
(73) Patentinhaber: Geberit International AG, 8645 Jona (CH)
(72) Erfinder: PREISIG, Felix, 8713 Uerikon (CH)
(74) Vertreter: Frischknecht, Harry Ralph

(56) Entgegenhaltungen:
- DE-A1-102009 012 514
- DE-U1-202011 101 212
- FR-E- 32 670
- GB-A- 474 566

## Beschreibung

### TECHNISCHES GEBIET

Die vorliegende Erfindung betrifft eine Bowdenzuganordnung zur Betätigung eines Abflussventils nach Anspruch 1, eine Abflussventilanordnung nach Anspruch 14 und einen Unterschrank nach Anspruch 15.

### STAND DER TECHNIK

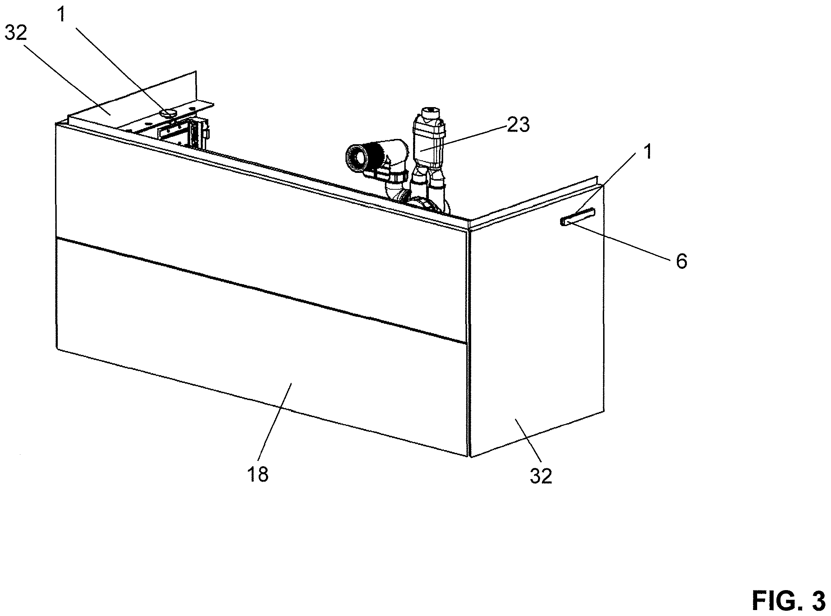

Aus dem Stand der Technik ist die Betätigung von Abflussventil durch einen Bowdenzug bekannt. Beispielsweise offenbart die DE 20 2011 101 212 U1 einen derartigen Bowdenzug. Das Zugseil des Bowdenzugs nach der DE 20 2011 101 212 U1 wird durch einen Betätigungshebel betätigt, welcher verschwenkt wird. Der Schwenkhebel wirkt dabei direkt auf den Bowdenzug ein und bewegt so das Zugseil. Nachteilig an der DE 20 2011 101 212 U1 ist die Tatsache, dass ein vergleichsweise tiefer Einbauraum benötigt wird. Dies kann beispielsweise von der Figur 3 gut erkannt werden.

### DARSTELLUNG DER ERFINDUNG

Ausgehend von diesem Stand der Technik liegt der Erfindung eine Aufgabe zugrunde, einen Bowdenzuganordnung anzugeben, welche die Nachteile des Standes der Technik überwindet. Der Bowdenzuganordnung liegt insbesondere die Aufgabe zugrunde, eine Einrichtung zu schaffen, welche in verschiedenen Einbausituationen gut und zuverlässig funktioniert. DE 10 2009 012514 A1 offenbart eine Bowdenzuganordnung gemäß dem Oberbegriff des Anspruchs 1, die einen Bowdenzugaktuator umfasst, der mehrere Bowdenzüge in einem Fahrzeug betätigt.

Diese Aufgabe löst die Bowdenzuganordnung nach Anspruch 1. Die Bowdenzuganordnung dient zur Übertragung einer Bewegung eines ersten Bowdenzuges auf einen zweiten Bowdenzug zwecks Betätigung eines Abflussventils. Die Bowdenzuganordnung umfasst einen ersten Bowdenzug, einen zweiten Bowdenzug und einen Bowdenzugaktuator, insbesondere einen Bowdenzugaktuator nach obiger Beschreibung. Der erste Bowdenzug wird durch den Bowdenzugaktuator betätigbar. Der zweite Bowdenzug steht mit einem Abflussventil in Verbindung und betätigt dieses entsprechend. Weiter weist die Bowdenzuganordnung ein Übertragungselement mit einem verschwenkbaren Übertragungshebel auf, welcher Übertragungshebel mit einem ersten Hebelarm mit dem ersten Bowdenzug in Verbindung steht und mit einem zweiten Hebelarm mit dem zweiten Bowdenzug in Verbindung steht, wobei der Übertragungshebel bei Betätigung des Aktuators durch den ersten Bowdenzug verschwenkt wird und so der zweiten Bowdenzug betätigt wird.

Die Umsetzung der Bewegung vom ersten Bowdenzug zum zweiten Bowdenzug über das Übertragungselement hat den Vorteil, dass der zweite Bowdenzug in Relation zum Abflussventil an einer determinierten Stelle in der konkreten Einbausituation angeordnet werden kann. Das heisst, es ist in der Einbausituation lediglich der erste Bowdenzug anzupassen bzw. dessen Länge zu wählen. Für den Einbau der Bowdenzuganordnung in einem Unterschrank eines Waschtisches heisst dies, dass der zweite Bowdenzug und das Übertragungselement immer an der gleichen Stelle im Unterschrank anzuordnen sind, während die Länge des ersten Bowdenzugs auf die Grösse, insbesondere die Breite des Unterschranks angepasst werden kann.

In allgemeinen Worten ausgedrückt, ist bei einer Serie von Bowdenzuganordnungen das Übertragungselement und der zweite Bowdenzug von Anordnung zur Anordnung vorzugsweise im Wesentlichen identisch oder gleich ausgebildet, während die Länge des ersten Bowdenzuges von Anordnung zu Anordnung unterschiedlich sein kann.

In einer Weiterbildung umfasst die Bowdenzuganordnung einen dritten Bowdenzug, wobei der dritte Bowdenzug durch einen weiteren Bowdenzugaktuator, insbesondere durch einen weiteren Bowdenzugaktuator nach obiger Beschreibung, betätigt wird. Der Übertragungshebel umfasst weiter einen dritten Hebelarm, welcher mit dem dritten Bowdenzug in Verbindung steht, wobei der Übertragungshebel bei Betätigung des weiteren Bowdenzugaktuator durch den dritten Bowdenzug verschwenkt wird und so der zweite Bowdenzug betätigt wird.

Durch die Anordnung des dritten Bowdenzugaktuators kann das besagte Abflussventil ebenfalls betätigt werden. Im Zusammenhang mit der Anordnung an einem Waschtisch bzw. einem Unterschrank eines Waschtisches ist dies vorteilhaft, weil so beidseitig zum Waschtisch ein Aktuator angeordnet werden kann.

Vorzugsweise ist der Übertragungshebel auf einer Grundplatte gelagert, welche zudem eine der Anzahl der Bowdenzüge entsprechende Anzahl von Aufnahmen für die Aufnahme der formstabilen Hüllen aufweist.

Vorzugsweise umfasst der Bowdenzugaktuator für einen Bowdenzug mit einer formstabilen Hülle und einem darin gelagerten Zugseil ein Supportelement, ein am Supportelement verschwenkbar gelagerten Schwenkhebel, der durch einen Benutzer verschwenkbar ist, und ein in einer Längsführung am Supportelement gelagerten Stössel mit einer Verbindungsstelle, an welcher das Zugseil des Bowdenzugs befestigt ist, und einer Anlenkstelle, an welcher der Schwenkhebel angelenkt ist. Der Stössel ist in der Längsführung entlang einer Längsrichtung bewegbar. Der Stössel wird dabei in der Längsführung entsprechend geführt. Der Schwenkhebel steht über die Anlenkstelle des Stössels derart in Verbindung, dass der Stössel bei einer Verschwenkung des Schwenkhebels in Längsrichtung bewegbar ist und so das Zugseil entsprechend bewegt.

Durch die Umsetzung der Schwenkbewegung in eine Längsbewegung des Stössels der sodann die Bewegung auf das Zugseil überträgt ergeht der Vorteil, dass die Gesamtstruktur des Bowdenzugaktuators kompakter ausgebildet werden kann.

Vorzugsweise ist die Schwenkachse, um welche der Schwenkhebel verschwenkbar ist, rechtwinklig zur Längsrichtung orientiert. Vorzugsweise ist die Schwenkachse in Richtung der Schwenkachse gesehen seitlich versetzt zur Längsführung angeordnet.

Vorzugsweise weist das Supportelement eine Aufnahme für die Aufnahme der formstabilen Hüllen auf.

Vorzugsweise ist der Stössel in Richtung der Schwenkachse gesehen vergleichsweise flach ausgebildet. Hierdurch kann die Kompaktheit des Bowdenzugaktuators weiter erhöht werden.

Vorzugsweise ist die Anlenkstelle am Stössel ein Führungszapfen, welcher in eine mit dem Schwenkhebel verschwenkbare Führungsbahn eingreift. Durch die Verschwenkung der Führungsbahn ist der in der Längsführung gelagerte Stössel in Längsrichtung bewegbar.

Der Führungszapfen liegt vorzugsweise am Ende gegenüber der Verbindungsstelle, an welcher das Zugseil befestigt ist.

Vorzugsweise ist die Führungsbahn winklig geneigt zur Längsrichtung der Längsführung, wobei die Führungsbahn in einer ersten und einer zweiten Endstellung vorzugsweise in einem Winkel von 45° zur Längsführung steht, und wobei die Führungsbahn mittig zwischen den beiden Endstellungen vorzugsweise in einem Winkel von 90° zur Längsführung steht.

Der Verschwenkwinkel des Schwenkhebels zwischen den beiden Endlagen ist vorzugsweise 90°. Andere Winkel sind auch denkbar.

Vorzugsweise wird die Längsführung durch eine Rückwand, durch von der Rückwand wegstehende Seitenwände begrenzt, wobei der Stössel, insbesondere bezüglich seiner Ausdehnung quer zur Längsrichtung gesehen, vollständig in der Längsführung liegt und wobei eine der Seitenwände eine Durchführöffnung für die Durchführung des Zugseils aufweist.

Vorzugsweise wird die Längsführung gegenüber der Rückwand durch eine Verschlussplatte begrenzt.

Die Verschlussplatte weist vorzugsweise eine geringe Dicke auf, so dass die Dicke des Bowdenzugaktuator durch die Verschlussplatte nicht weiter erhöht wird.

Vorzugsweise ist die Dicke des Supportelementes und der damit verbundenen Verschlussplatte von der Rückseite bis zur freiliegenden Frontfläche der Verschlussplatte im Bereich von 10 Millimetern bis 25 Millimetern.

Vorzugsweise schliesst sich der Längsführung ein Hohlraum an, wobei der Stössel mit seiner Anlenkstelle in den Hohlraum einragt und dort mit dem Schwenkhebel in Verbindung steht.

Vorzugsweise liegt die Führungsbahn des Schwenkhebels im besagten Hohlraum.

Vorzugsweise ist der Schwenkhebel von der Führungsbahn und dem Stössel abgesetzt angeordnet, insbesondere derart, dass zwischen der Führungsbahn und dem Stössel ein Zwischenraum für die Aufnahme von Teilen einer Seitenwand eines Schrankmöbels geschaffen wird. Das heisst mit anderen Worten, dass der Schwenkhebel in Richtung der Schwenkachse gesehen mit einem Abstand zum Supportelement steht.

Vorzugsweise weist der Bowdenzugaktuator ein mit dem Schwenkhebel drehfest in Verbindung stehendes Schwenkelement auf, welches mit der Anlenkstelle des Stössels in Verbindung steht.

Vorzugsweise weist der Bowdenzugaktuator weiter ein Blendenelement auf, welches im Bereich des Schwenkhebels angeordnet ist, wobei das Schwenkelement mit einem Achsenabschnitt durch eine Öffnung im Blendenelement hindurch ragt.

Eine Abflussventilanordnung umfasst eine Bowdenzuganordnung nach obiger Beschreibung und ein Abflussventil mit einer Ventilklappe, wobei der zweite Bowdenzug auf die Ventilklappe wirkt.

Ein Unterschrank für einen Waschtisch umfasst mindestens eine Seitenwand mit einer zum Innenraum des Unterschrankes zugewandten Ausnehmung, in welcher der Bowdenzugaktuator eingelassen ist, wobei der Schwenkhebel aussenseitig zum Unterschrank angeordnet ist.

Vorteilhafterweise ist das Supportelement vollständig in der besagten Ausnehmung gelagert.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1a-1c: Frontansichten einer Ausführungsform des erfindungsgemässen Bowdenzugaktuators;
- Fig. 2: eine Explosionsansicht des Bowdenzugaktuators nach Figur 1;
- Fig. 3: eine perspektivische Ansicht eines Unterschrankes mit dem Bowdenzugaktuator nach Figur 1;
- Fig. 4: eine weitere perspektivische Ansicht eines Unterschrankes mit dem Bowdenzugaktuator nach Figur 1;
- Fig. 5a/5b: eine erste Konfiguration einer Bowdenzuganordnung mit einem Abflussventil;
- Fig. 6a/6b: eine zweite Konfiguration einer Bowdenzuganordnung mit einem Abflussventil; und
- Fig. 7a/7b: eine dritte Konfiguration einer Bowdenzuganordnung mit einem Abflussventil.

### BESCHREIBUNG BEVORZUGTER AUSFÜHRUNGSFORMEN

In den Figuren l a bis 1c wird ein erfindungsgemässer Bowdenzugaktuator 1 für einen Bowdenzug 2a gezeigt.

Der Bowdenzug 2a umfasst eine formstabile Hülle 3 und ein darin gelagertes Zugseil 4.

Der Bowdenzugaktuator 1 umfasst ein Supportelement 5, ein am Supportelement 5 verschwenkbar gelagerten Schwenkhebel 6, der durch einen Benutzer verschwenkbar ist, und ein in einer Längsführung 7 am Supportelement 5 gelagerten Stössel 8 mit einer Verbindungsstelle 9, an welcher das Zugseil 4 des Bowdenzugs 2a befestigt ist.

Weiter umfasst der Stössel 8 eine Anlenkstelle 10, an welcher der Schwenkhebel 6 angelenkt ist, derart dass eine Betätigungsbewegung des Schwenkhebels 6 auf den Stössel 8 übertragbar ist. Der Schwenkhebel 6 steht über die Anlenkstelle 10 des Stössels 8 derart in Verbindung, dass der Stössel 8 bei einer Verschwenkung des Schwenkhebels 6 in Längsrichtung L bewegbar ist und so das Zugseil 4 entsprechend bewegt.

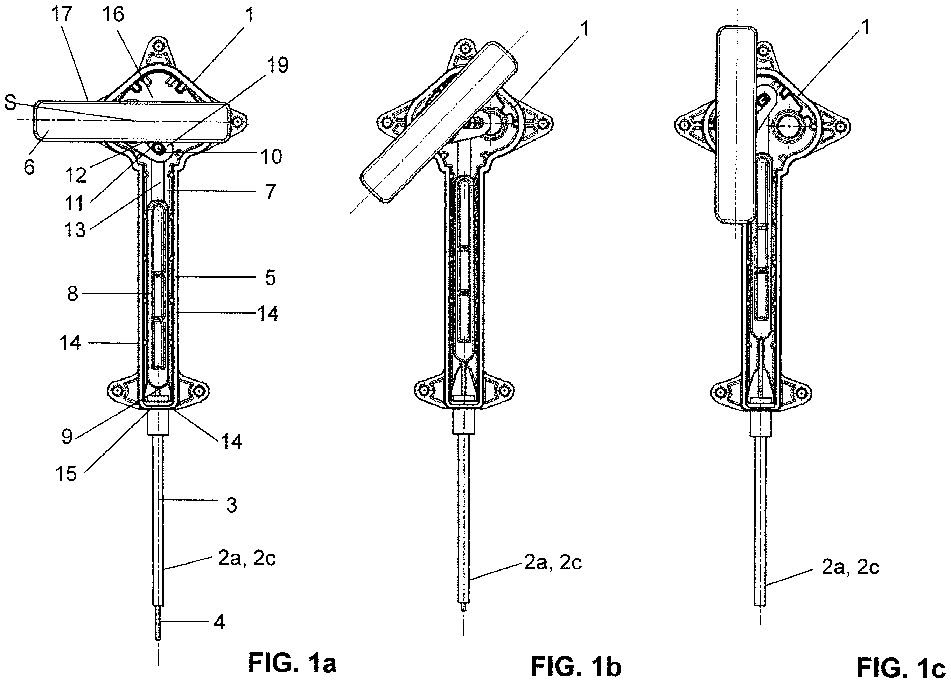

In der Figur la ist der Schwenkhebel 6 in einer ersten Endlage. In der Figur 1b ist der Schwenkhebel 6 um 45 Grad bezüglich der Ausgangslage der Figur 1a verschwenkt. Hierbei wurde der Stössel 8 in der Längsführung 7 in Längsrichtung L nach oben bewegt. Gleichzeitig wurde das Zugseil 4 entsprechend nach oben gezogen. In der Figur 1c wird eine zweite Endlage gezeigt. Hier steht der Schwenkhebel in einem Winkel von 90 Grad bezüglich der ersten Endlage und der Stössel 8 liegt an seiner oberen Position. Bei der Verschwenkung wurde das Zugseil 4 entsprechend gezogen.

Die Schwenkachse S, um welche der Schwenkhebel 6 verschwenkbar ist, steht rechtwinklig zur Längsrichtung L. In den gezeigten Figuren 1a bis 1c verläuft die Schwenkachse S rechtwinklig zur Blattoberfläche. Die Schwenkachse S ist in Richtung der Schwenkachse S gesehen seitlich versetzt zur Längsführung 7 angeordnet.

Die Anlenkstelle 10 am Stössel 8 ist ein Führungszapfen 11, welcher hier am oberen Ende des Stössels 8 angeordnet ist. Der Führungszapfen 11 ragt in eine mit dem Schwenkhebel 6 verschwenkbare Führungsbahn 12 ein, wobei durch die Verschwenkung der Führungsbahn 12 der in der Längsführung 7 gelagerte Stössel 8 in Längsrichtung L bewegbar ist. Die Verschwenkung der Führungsbahn 12 wird ebenfalls in den Figuren 1a bis 1c gezeigt. Während der Verschwenkung kommt es zu einer Relativbewegung zwischen Führungsbahn 12 und Führungszapfen 11, wodurch der Stössel 8 angehoben wird.

Die Führungsbahn 12 ist in der gezeigten Ausführungsform winklig geneigt zur Längsrichtung L der Längsführung 7 orientiert. In der ersten Endlage und auch in der zweiten Endlage, welche in den Figuren la bzw. Figur 1c gezeigt wird, steht die Führungsbahn 12 in einem Winkel von 45 Grad zur Längsführung 7. In der Stellung mittig zwischen den beiden Endstellungen steht die Führungsbahn 12 in einem Winkel von 90 Grad zur Längsführung 7. Die Mittelstellung wird in der Figur 1b dargestellt.

Das Zugseil 4 ist im Supportelement 5 im Wesentlichen parallel zur Längsrichtung L orientiert und mündet über eine Durchführöffnung 15 aus der Längsführung 7. Im Bereich der Durchführöffnung 15 ist zugleich eine Aufnahme 35 für die Lagerung der formstabilen Hülle 3 vorgesehen.

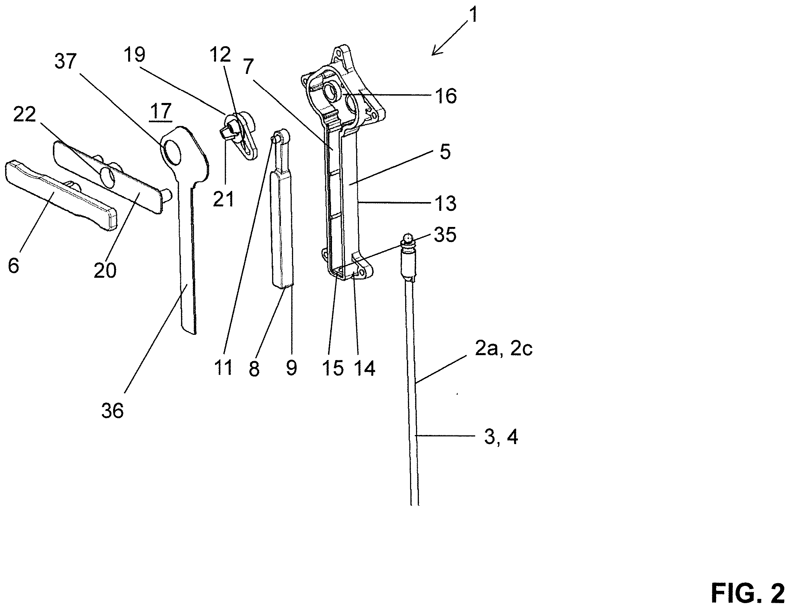

In der Figur 2 wird eine perspektivische Explosionsdarstellung des Bowdenzugaktuators 1 gezeigt. Die Längsführung 7 wird in der gezeigten Ausführungsform durch eine Rückwand 13 begrenzt, wobei von der Rückwand 13 wegstehende Seitenwände 14 abstehen, welche die Längsführung 7 seitlich begrenzen. Hierdurch wird ein Hohlraum geschaffen, welcher die Längsführung 7 bereitstellt. Der Stössel 8 ist bezüglich seiner Ausdehnung quer zur Längsrichtung L gesehen vollständig in der Führungsbahn 12 liegend angeordnet. Die Seitenwände 14 weisen im unteren Bereich die besagte Durchführöffnung 15 für die Durchführung des Zugseiles 4 auf. Der Stössel 8 weist eine Länge in Längsrichtung L auf, welche eine gute Führung im Inneren der Längsführung 7 erlaubt.

Gegenüber der Rückwand 13 ist die Längsführung 7 durch eine Verschlussplatte 36 begrenzt. Die Verschlussplatte 36 lässt sich vorzugsweise mit dem Supportelement 5 verbinden.

Der Längsführung 7 schliesst sich oberseitig ein Hohlraum 16 an. Der Stössel 8 ragt mit seiner Anlenkstelle 10 in den Hohlraum 16 ein und steht dort mit dem Schwenkhebel 6 in Verbindung. Die Führungsbahn 12 des Schwenkhebels 6 liegt dabei vorzugsweise im besagten Hohlraum. In der gezeigten Ausführungsform ist die Führungsbahn 12 Teil eines Schwenkelementes 19. Das Schwenkelement 19 liegt im besagten Hohlraum 16 und ist dort verschwenkbar. Das Schwenkelement 19 ist dabei drehfest mit dem Schwenkhebel 6 in Verbindung. Das Schwenkelement 19 weist einen Achsenabschnitt 21 auf, welches durch eine Öffnung 37 in der Verschlussplatte 36 hindurchragt. An dem Ende, welches über die Verschlussplatte 36 hervorsteht ist dabei der Schwenkhebel 6 entsprechend befestigt.

Weiter weist der Bowdenzugaktuator 1 ein Blendenelement 20 auf, welches im Bereich des Schwenkhebels angeordnet ist. Dabei ist das Schwenkelement 19 ebenfalls mit dem Achsenabschnitt 21 durch eine Öffnung 22 im Blendenelement 20 hindurchgeführt. Das Blendenelement 20 dient im Wesentlich dazu beim Einbau des Bowdenzugaktuators 1 in ein Möbel eine entsprechende Verblendung einer Nut nach aussen hin zu erreichen.

In der Figur 3 wird schematisch eine Einbausituation des Bowdenzugaktuators 1 gezeigt. Der Bowdenzugaktuator 1 ist hier an einem Unterschrank 18 eines Waschtisches angeordnet. Im Konkreten ist der Bowdenzugaktuator 1 in der Seitenwand 32 des Unterschrankes 18 angeordnet. Dabei ist der Schwenkhebel 6 derart angeordnet, dass dieser von aussen her zugänglich ist. Der Schwenkhebel 6 kann dann zur feststehenden Seitenwand 32 entsprechend verschwenkt werden. Der Bowdenzug wirkt dabei auf ein Abflussventil 23.

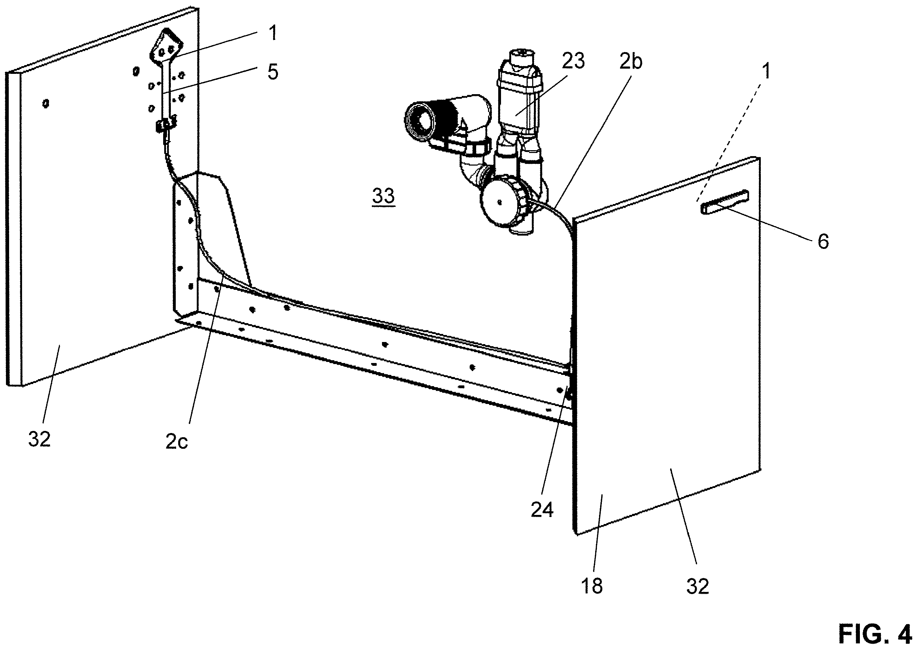

In der Figur 4 wird der Einbau des Bowdenzugaktuators noch weiter verdeutlicht. Der Bowdenzugaktuator liegt in einer Ausnehmung 34, welche dem Innenraum 33 des Unterschrankes 18 zugewandt ist. Die Ausnehmung 34 erstreckt sich dabei in die Seitenwand 32 hinein, sodass der Bowdenzugaktuator 1 darin Platz findet. Das Achsenelement 21 des Schwenkelementes 19 durchdringt dann die Seitenwand 32 nach aussen, wo dann der Schwenkhebel 6 entsprechend angelenkt ist. Hinter dem Schwenkhebel 6 befindet sich das Blendenelement 20.

Der Bowdenzug 2a wird in der gezeigten Ausführungsform über ein Übertragungselement 24 zum Abflussventil 23 geführt. Dabei wird über das Zugseil eine Ventilklappe 31 des Abflussventils 23 entsprechend betätigt.

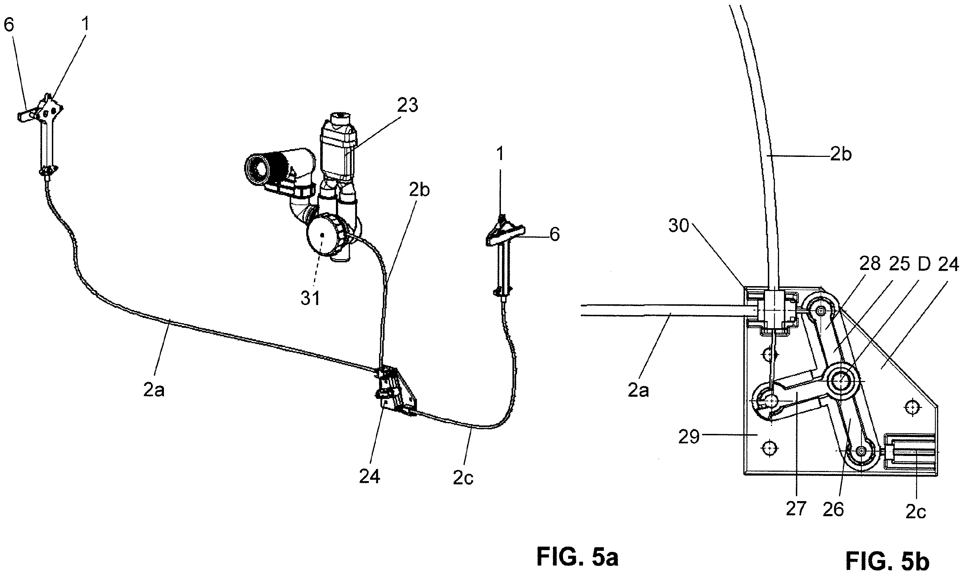

Die Figuren 5a und 5b zeigen eine mögliche Bowdenzuganordnung zur Übertragung einer Bewegung eines ersten Bowdenzuges 2a auf einen zweiten Bowdenzug 2b bzw. zur Übertragung der Bewegung eines dritten Bowdenzugs 2c auf den zweiten Bowdenzug 2b. Der erste Bowdenzug 2a und der dritte Bowdenzug 2c werden mit jeweils einem Bowdenzugaktuator 1 betätigt. Hierdurch wird das Zugseil entsprechend bewegt. Über ein Übertragungselement 24 wird die Bewegung vom ersten Bowdenzug 2a bzw. vom dritten Bowdenzug 2c auf den zweiten Bowdenzug 2b übertragen. Das Übertragungselement 24 weist hierfür einen Übertragungshebel 25 mit drei Hebelarmen 26, 27, 28 auf. Die Hebelarme stehen jeweils rechtwinklig zueinander und sind an einem Drehpunkt D an einer Grundplatte 29 gelagert. Bei einem Zug vom ersten Bowdenzug 2a wird der Übertragungshebel 25 entsprechend verschwenkt und zieht dabei den zweiten Bowdenzug 2b ebenfalls. Gleichermassen wird der Übertragungshebel 25 dann auch wieder zurückgedrückt. In einer ähnlichen Art und Weise funktioniert dann die Betätigung des dritten Bowdenzugs 2c. Hierbei wird ebenfalls der Übertragungshebel 25 verschwenkt, was zu einer Betätigung des Bowdenzugs 2b führt. Nebst der Lagerung des Übertragungshebels 25 weist die Grundplatte weiterhin eine der Anzahl der Bowdenzüge 2a bis 2c entsprechende Anzahl von Aufnahmen 30 für die Aufnahme der formstabilen Hüllen 3 auf.

Die Ausbildung des Übertragungselementes 24 ist besonders vorteilhaft, weil der zweite Bowdenzug 2b, der mit dem Abflussventil 23 in Verbindung steht, immer die gleiche Länge aufweisen kann. Das heisst, Abflussventil 23, zweiter Bowdenzug 2b und Übertragungselement 24 können als Einheit bereitgestellt werden. Für die Anpassung auf verschiedene Grössen von Unterschränken 18 ist dann lediglich die Länge des ersten bzw. des dritten Bowdenzuges 2a bzw. 2c einzustellen.

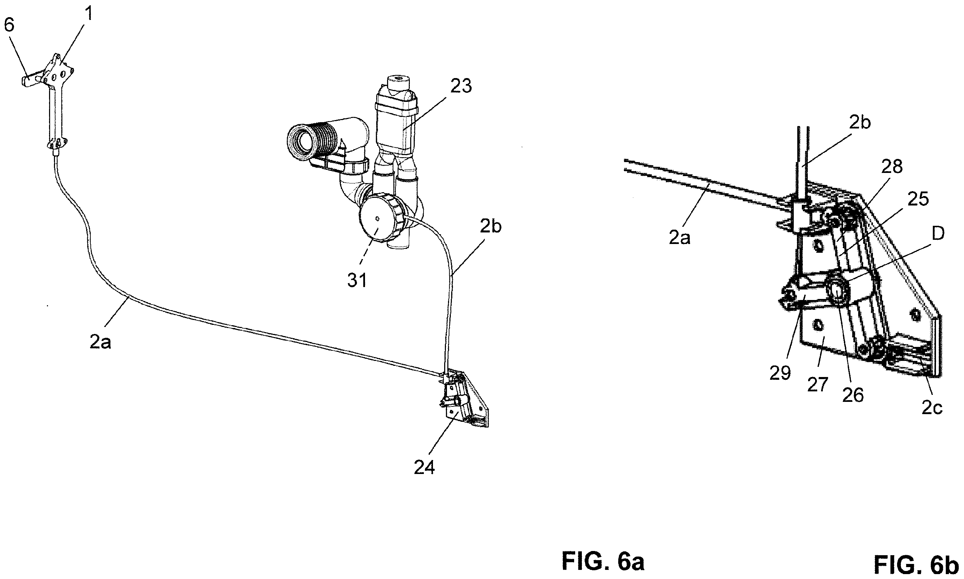

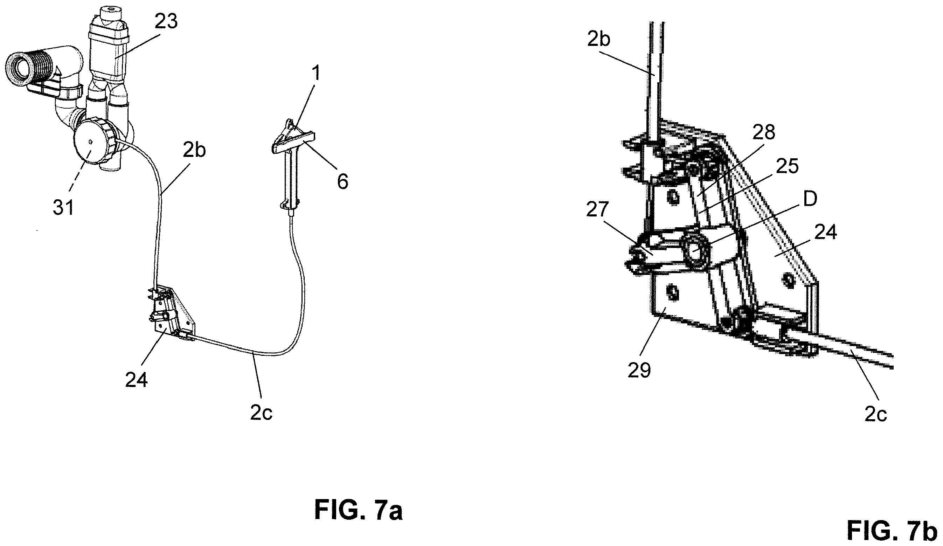

In den Figuren 6a bis 7b werden weitere Bowdenzuganordnungen gezeigt. Hierbei handelt es sich aber jeweils um die Umsetzung von einem ersten Bowdenzug 2a auf den zweiten Bowdenzug 2b, wobei die Konfiguration "links" in den Figuren 6a, 6b und die Konfiguration "rechts" in den Figuren 7a, 7b gezeigt wird. Links und rechts heisst in diesem Zusammenhang die Anordnung des Bowdenzugaktuators 1 auf der einen bzw. der anderen Seite des Abflussventils 23.

### BEZUGSZEICHENLISTE

| | | | |
|---|---|---|---|
| 1 | Bowdenzugaktuator | 27 | zweiter Hebelarm |
| 2a, 2b, 2c | Bowdenzug | 28 | erster Hebelarm |
| 3 | Hülle | 29 | Grundplatte |
| 4 | Zugseil | 30 | Aufnahme |
| 5 | Supportelement | 31 | Ventilklappe |
| 6 | Schwenkhebel | 32 | Seitenwand |
| 7 | Längsführung | 33 | Innenraum |
| 8 | Stössel | 34 | Ausnehmung |
| 9 | Verbindungsstelle | 35 | Aufnahme |
| 10 | Anlenkstelle | 36 | Verschlussplatte |
| 11 | Führungszapfen | 37 | Öffnung |
| 12 | Führungsbahn | | |
| 13 | Rückwand | S | Schwenkachse |
| 14 | Seitenwand | D | Drehpunkt |
| 15 | Durchführöffnung | | |
| 16 | Hohlraum | | |
| 17 | Zwischenraum | | |
| 18 | Schrankmöbel | | |
| 19 | Schwenkelement | | |
| 20 | Blendenelement | | |
| 21 | Achsenabschnitt | | |
| 22 | Öffnung | | |
| 23 | Abflussventil | | |
| 24 | Übertragungselement | | |
| 25 | Übertragungshebel | | |
| 26 | dritter Hebelarm | | |

## Patentansprüche

1. Bowdenzuganordnung zur Übertragung einer Bewegung eines ersten Bowdenzuges (2a) auf einen zweiten Bowdenzug (2b), umfassend einen ersten Bowdenzug (2a), einen zweiten Bowdenzug (2b) und einen Bowdenzugaktuator (1),
wobei der erste Bowdenzug (2a) durch den Bowdenzugaktuator (1) betätigbar ist, **dadurch gekennzeichnet, dass** der zweite Bowdenzug (2b) mit einem Abflussventil (23) in Verbindung steht, und
wobei die Bowdenzuganordnung ein Übertragungselement (24) mit einem verschwenkbaren Übertragungshebel (25) aufweist, welcher Übertragungshebel (25) mit einem ersten Hebelarm (26) mit dem ersten Bowdenzug (2a) in Verbindung steht und mit einem zweiten Hebelarm (27) mit dem zweiten Bowdenzug (2b) in Verbindung steht, wobei der Übertragungshebel (25) bei Betätigung des Aktuators durch den ersten Bowdenzug (2a) verschwenkt wird und so der zweiten Bowdenzug (2b) betätigt wird.

2. Bowdenzuganordnung nach Anspruch 1, **dadurch gekennzeichnet, dass** die Bowdenzuganordnung einen dritten Bowdenzug (2c) umfasst, wobei der dritte Bowdenzug (2c) durch einen weiteren Bowdenzugaktuator (1) betätigt wird,
wobei der Übertragungshebel (25) weiter einen dritten Hebelarm (28) umfasst, welcher mit dem dritten Bowdenzug (2c) in Verbindung steht,
wobei der Übertragungshebel (25) bei Betätigung des weiteren Bowdenzugaktuator (1) durch den dritten Bowdenzug (2c) verschwenkt wird und so der zweite Bowdenzug (2b) betätigt wird.

3. Bowdenzuganordnung nach Anspruch 1 oder 2, **dadurch gekennzeichnet, dass** der Übertragungshebel (25) auf einer Grundplatte (29) gelagert ist, welche zudem eine der Anzahl der Bowdenzüge (2a, 2b, 2c) entsprechende Anzahl von Aufnahmen (30) für die Aufnahme der formstabilen Hüllen (3) aufweist.

4. Bowdenzuganordnung nach einem der vorhergehenden Ansprüche, **dadurch gekennzeichnet, dass** der Bowdenzugaktuator (1)
ein Supportelement (5),
ein am Supportelement (5) verschwenkbar gelagerten Schwenkhebel (6), der durch einen Benutzer verschwenkbar ist, und
ein in einer Längsführung (7) am Supportelement (5) gelagerten Stössel (8) mit einer Verbindungsstelle (9), an welcher das Zugseil (4) des Bowdenzugs (2a, 2b, 2c) befestigt ist, und einer Anlenkstelle (10), an welcher der Schwenkhebel (6) angelenkt ist, umfasst,
wobei der Stössel (8) in der Längsführung (7) entlang einer Längsrichtung (L) bewegbar ist, und
wobei der Schwenkhebel (6) über die Anlenkstelle (10) des Stössels (8) derart in Verbindung steht, dass der Stössel (8) bei einer Verschwenkung des Schwenkhebels (6) in Längsrichtung (L) bewegbar ist und so das Zugseil (4) entsprechend bewegt.

5. Bowdenzuganordnung nach Anspruch 4, **dadurch gekennzeichnet, dass** die Schwenkachse (S), um welche der Schwenkhebel (6) verschwenkbar ist, rechtwinklig zur Längsrichtung (L) orientiert ist, und/oder dass die Schwenkachse (S) in Richtung der Schwenkachse (S) gesehen seitlich versetzt zur Längsführung (7) angeordnet ist.

6. Bowdenzuganordnung nach Anspruch 4 oder 5, **dadurch gekennzeichnet, dass** die Anlenkstelle (10) am Stössel (8) ein Führungszapfen (11) ist, welcher in eine mit dem Schwenkhebel (6) verschwenkbare Führungsbahn (12) eingreift, wobei durch die Verschwenkung der Führungsbahn (12) der in der Längsführung (7) gelagerte Stössel (8) in Längsrichtung (L) bewegbar ist.

7. Bowdenzuganordnung nach Anspruch 6, **dadurch gekennzeichnet, dass** die Führungsbahn (12) winklig geneigt zur Längsrichtung (L) der Längsführung (7) orientiert ist, wobei die Führungsbahn (12) in einer ersten und einer zweiten Endstellung vorzugsweise in einem Winkel von 45° zur Längsführung (7) steht, und wobei die Führungsbahn (12) mittig zwischen den beiden Endstellungen vorzugsweise in einem Winkel von 90° zur Längsführung (7) steht.

8. Bowdenzuganordnung nach einem der vorhergehenden Ansprüche 4 bis 7, **dadurch gekennzeichnet, dass** die Längsführung (7) durch eine Rückwand (13), durch von der Rückwand (13) wegstehende Seitenwände (14) begrenzt wird, wobei der Stössel (8), insbesondere bezüglich seiner Ausdehnung quer zur Längsrichtung (L) gesehen, vollständig in der Längsführung (7) liegt und wobei eine der Seitenwände (14) eine Durchführöffnung (15) für die Durchführung des Zugseils (4) aufweist.

9. Bowdenzuganordnung nach Anspruch 8, **dadurch gekennzeichnet, dass** die Längsführung (7) gegenüber der Rückwand (13) durch eine Verschlussplatte (36) begrenzt ist.

10. Bowdenzuganordnung nach Anspruch 6 bzw. 7, oder Anspruch 8 bzw. 9, wenn Anspruch 8 abhängig von Anspruch 6 bzw. 7 ist, **dadurch gekennzeichnet, dass** sich der Längsführung (7) ein Hohlraum (16) anschliesst, wobei der Stössel (8) mit seiner Anlenkstelle (10) in den Hohlraum (16) einragt und dort mit dem Schwenkhebel (6) in Verbindung steht, wobei die Führungsbahn (12) des Schwenkhebels (6) vorzugsweise im besagten Hohlraum (16) liegt.

11. Bowdenzuganordnung nach Anspruch 6, 7 bzw. 10, oder Anspruch 8 bzw. 9, wenn Anspruch 8 abhängig von Anspruch 6 bzw. 7 ist,
**dadurch gekennzeichnet, dass** der Schwenkhebel (6) von der Führungsbahn (12) und dem Stössel (8) abgesetzt angeordnet ist, insbesondere derart, dass zwischen der Führungsbahn (12) und dem Stössel (8) ein Zwischenraum (17) für die Aufnahme von Teilen einer Seitenwand eines Schrankmöbels (18) geschaffen wird.

12. Bowdenzuganordnung nach Anspruch 6, 7, 10 bzw. 11, oder Anspruch 8 bzw. 9, wenn Anspruch 8 abhängig von Anspruch 6 bzw. 7 ist,
**dadurch gekennzeichnet, dass** der Bowdenzugaktuator (1) ein mit dem Schwenkhebel (6) drehfest in Verbindung stehendes Schwenkelement (19) aufweist, welches die Führungsbahn (12) aufweist und mit der Anlenkstelle (10) des Stössels (8) in Verbindung steht.

13. Bowdenzuganordnung nach Anspruch 12, **dadurch gekennzeichnet, dass** der Bowdenzugaktuator (1) weiter ein Blendenelement (20) aufweist, welches im Bereich des Schwenkhebels (6) angeordnet ist, wobei das Schwenkelement (19) mit einem Achsenabschnitt (21) durch eine Öffnung (22) im Blendenelement (20) hindurch ragt.

14. Abflussventilanordnung umfassend eine Bowdenzuganordnung nach einem der vorhergehenden Ansprüche und ein Abflussventil (23) mit einer Ventilklappe (31), wobei der zweite Bowdenzug (2b) auf die Ventilklappe (31) wirkt.

15. Unterschrank (18) für einen Waschtisch umfassend mindestens eine Seitenwand (32) mit einer zum Innenraum (33) des Unterschrankes (18) zugewandten Ausnehmung (34), wobei der Unterschrank weiterhin eine Bowdenzuganordnung nach einem der vorhergehenden Ansprüche 4 bis 14 umfasst, wobei der Bowdenzugaktuator in der Ausnehmung eingelassen ist, und wobei der Schwenkhebel (6) aussenseitig angeordnet ist.

## Claims

1. Bowden cable arrangement for transmitting a movement of a first Bowden cable (2a) to a second Bowden cable (2b), comprising a first Bowden cable (2a), a second Bowden cable (2b) and a Bowden cable actuator (1),
wherein the first Bowden cable (2a) can be activated by the Bowden cable actuator (1), **characterised in that** the second Bowden cable (2b) is connected to a drain valve (23), and
wherein the Bowden cable arrangement has a transmission element (24) having a pivotable transmission lever (25), which is connected via a first lever arm (26) to the first Bowden cable (2a) and which is connected via a second lever arm (27) to the second Bowden cable (2b), wherein the transmission lever (25) when the actuator is activated is pivoted by the first Bowden cable (2a) and the second Bowden cable (2b) is thus activated.

2. Bowden cable arrangement according to claim 1, **characterised in that** the Bowden cable arrangement comprises a third Bowden cable (2c), wherein the third Bowden cable (2c) is activated by means of an additional Bowden cable actuator (1),
wherein the transmission lever (25) further comprises a third lever arm (28) which is connected to the third Bowden cable (2c),
wherein the transmission lever (25) when the additional Bowden cable actuator (1) is activated is pivoted by the third Bowden cable (2c) and the second Bowden cable (2b) is thus activated.

3. Bowden cable arrangement according to claim 1 or claim 2, **characterised in that** the transmission lever (25) is supported on a base plate (29) which additionally has a number of receiving members (30) for receiving the dimensionally stable sheaths (3) corresponding to the number of Bowden cables (2a, 2b, 2c).

4. Bowden cable arrangement according to any one of the preceding claims, **characterised in that** the Bowden cable actuator (1) comprises a support element (5),
a pivot lever (6) which is pivotably supported on the support element (5) and which can be pivoted by a user, and
a tappet (8) which is supported in a longitudinal guide (7) on the support element (5) and which has a connection location (9) to which the pulling cable (4) of the Bowden cable (2a, 2b, 2c) is secured, and an articulation location (10) to which the pivot lever (6) is articulated,
wherein the tappet (8) can be moved in the longitudinal guide (7) in a longitudinal direction (L), and
wherein the pivot lever (6) is connected via the articulation location (10) of the tappet (8) in such a manner that the tappet (8) can be moved in a longitudinal direction (L) when the pivot lever (6) is pivoted and thus moves the pulling cable (4) accordingly.

5. Bowden cable arrangement according to claim 4, **characterised in that** the pivot axis (S), about which the pivot lever (6) can be pivoted, is orientated at right-angles relative to the longitudinal direction (L), and/or **in that** the pivot axis (S) when viewed in the direction of the pivot axis (S) is arranged in a laterally offset manner with respect to the longitudinal guide (7).

6. Bowden cable arrangement according to claim 4 or 5, **characterised in that** the articulation location (10) on the tappet (8) is a guide pin (11) which engages in a guide path (12) which can be pivoted with the pivot lever (6), wherein, as a result of the pivoting of the guide path (12), the tappet (8) which is supported in the longitudinal guide (7) can be moved in the longitudinal direction (L).

7. Bowden cable arrangement according to claim 6, **characterised in that** the guide path (12) is orientated so as to be angled in an inclined manner with respect to the longitudinal direction (L) of the longitudinal guide (7), wherein the guide path (12) is located in a first and a second end position preferably at an angle of 45° with respect to the longitudinal guide (7), and wherein the guide path (12) is located centrally between the two end positions preferably at an angle of 90° with respect to the longitudinal guide (7).

8. Bowden cable arrangement according to any one of the preceding claims 4 to 7, **characterised in that** the longitudinal guide (7) is delimited by a rear wall, by side walls (14) which protrude from the rear wall (13), wherein the tappet (8), in particular when viewed with respect to its extent transversely relative to the longitudinal direction (L), is located completely in the longitudinal guide (7) and wherein one of the side walls (14) has a passage opening (15) for the passage of the pulling cable (4).

9. Bowden cable arrangement according to claim 8, **characterised in that** the longitudinal guide (7) is delimited with respect to the rear wall (13) by a closure plate (36).

10. Bowden cable arrangement according to any one of the preceding claims 6 and 7 or according to any one of the preceding claims 8 and 9 when dependent on any one of claims 6 and 7, **characterised in that** the longitudinal guide (7) is adjoined by a hollow space (16), wherein the tappet (8) protrudes with the articulation location (10) thereof into the hollow space (16) and is connected at that location to the pivot lever (6), wherein the guide path (12) of the pivot lever (6) is preferably located in this hollow space (16).

11. Bowden cable arrangement according to any one of the preceding claims 6, 7 and 10 or according to any one of the preceding claims 8 and 9 when dependent on any one of claims 6 and 7, **characterised in that** the pivot lever (6) is arranged to be recessed from the guide path (12) and the tappet (8), in particular in such a manner that, between the guide path (12) and the tappet (8), an intermediate space (17) for receiving portions of a side wall of a cupboard unit (18) is provided.

12. Bowden cable arrangement according to any one of the preceding claims 6, 7 and 10 or 11 or according to any one of the preceding claims 8 and 9 when dependent on any one of claims 6 and 7, **characterised in that** the Bowden cable actuator (1) has a pivot element (19) which is connected to the pivot lever (6) in a rotationally secure manner and which has the guide path (12) and is connected to the articulation location (10) of the tappet (8).

13. Bowden cable arrangement according to claim 12, **characterised in that** the Bowden cable actuator (1) further has a screen element (20) which is arranged in the region of the pivot lever (6), wherein the pivot element (19) protrudes with an axle portion (21) through an opening (22) in the screen element (20).

14. Drain valve arrangement comprising a Bowden cable arrangement according to any one of the preceding claims and a drain valve (23) having a valve flap (31), wherein the second Bowden cable (2b) acts on the valve flap (31).

15. Lower cupboard (18) for a washbasin comprising at least one side wall (32) having a recess (34) which faces the interior (33) of the lower cupboard (18), wherein the lower cupboard further comprises a Bowden cable arrangement according to any one of the preceding claims 4 to 14, wherein the Bowden cable actuator is introduced in the recess and wherein the pivot lever (6) is arranged at the outer side.

## Revendications

1. Ensemble à câbles Bowden servant à la transmission d'un mouvement d'un premier câble Bowden (2a) à un deuxième câble Bowden (2b), comportant un premier câble Bowden (2a), un deuxième câble Bowden (2b) et un actionneur de câble Bowden (1),
le premier câble Bowden (2a) pouvant être actionné par l'actionneur de câble Bowden (1),
**caractérisé en ce que**
le deuxième câble Bowden (2b) est en liaison avec une soupape d'évacuation (23), et
l'ensemble à câbles Bowden comprenant un élément de transmission (24) doté d'un levier de transmission pivotant (25), lequel levier de transmission (25) est en liaison avec le premier câble Bowden (2a) par un premier bras de levier (26) et est en liaison avec le deuxième câble Bowden (2b) par un deuxième bras de levier (27), le levier de transmission (25) étant pivoté par le premier câble Bowden (2a) lors de l'actionnement de l'actionneur et le deuxième câble Bowden (2b) étant ainsi actionné.

2. Ensemble à câbles Bowden selon la revendication 1, **caractérisé en ce que** l'ensemble à câbles Bowden comporte un troisième câble Bowden (2c), le troisième câble Bowden (2c) étant actionné par un autre actionneur de câble Bowden (1)
le levier de transmission (25) comportant en outre un troisième bras de levier (28), lequel est en liaison avec le troisième câble Bowden (2c),
le levier de transmission (25) étant pivoté par le troisième câble Bowden (2c) lors de l'actionnement de l'autre actionneur de câble Bowden (1) et le deuxième câble Bowden (2b) étant ainsi actionné.

3. Ensemble à câbles Bowden selon la revendication 1 ou 2, **caractérisé en ce que** le levier de transmission (25) est monté sur une plaque de base (29), laquelle comprend en outre un nombre de logements (30) correspondant au nombre de câbles Bowden (2a, 2b, 2c) pour le logement des gaines (3) à stabilité de forme.

4. Ensemble à câbles Bowden selon l'une des revendications précédentes, **caractérisé en ce que** l'actionneur de câble Bowden (1) comporte
un élément de support (5),
un levier pivotant (6) monté pivotant sur l'élément de support (5), lequel levier peut être pivoté par un utilisateur, et
un poussoir (8) monté dans un guide longitudinal (7) sur l'élément de support (5) et doté d'un point de liaison (9) auquel le câble tracteur (4) du câble Bowden (2a, 2b, 2c) est fixé et d'un point d'articulation (10) sur lequel le levier pivotant (6) est articulé,
le poussoir (8) étant déplaçable dans le guide longitudinal (7) le long d'une direction longitudinale (L), et
le levier pivotant (6) étant en liaison par le biais du point d'articulation (10) du poussoir (8) de telle sorte que le poussoir (8) soit déplaçable dans la direction longitudinale (L) en cas de pivotement du levier pivotant (6) et que le câble tracteur (4) soit ainsi déplacé de manière correspondante.

5. Ensemble à câbles Bowden selon la revendication 4, **caractérisé en ce que** l'axe de pivotement (S) autour duquel le levier pivotant (6) peut pivoter est orienté perpendiculairement à la direction longitudinale (L), et/ou **en ce que** l'axe de pivotement (S) est disposé de manière décalée latéralement par rapport au guide longitudinal (7) vu dans la direction de l'axe de pivotement (S).

6. Ensemble à câbles Bowden selon la revendication 4 ou 5, **caractérisé en ce que** le point d'articulation (10) sur le poussoir (8) est un ergot de guidage (11), lequel vient en prise dans une glissière de guidage (12) pouvant pivoter avec le levier pivotant (6), le poussoir (8) monté dans le guide longitudinal (7) étant déplaçable dans la direction longitudinale (L) par le pivotement de la glissière de guidage (12).

7. Ensemble à câbles Bowden selon la revendication 6, **caractérisé en ce que** la glissière de guidage (12) est orientée de manière inclinée de façon angulaire par rapport à la direction longitudinale (L) du guide longitudinal (7), la glissière de guidage (12) se situant de préférence suivant un angle de 45° par rapport au guide longitudinal (7) dans une première et une deuxième position finale, et la glissière de guidage (12) se situant de préférence suivant un angle de 90° par rapport au guide longitudinal (7) centralement entre les deux positions finales.

8. Ensemble à câbles Bowden selon l'une des revendications précédentes 4 à 7, **caractérisé en ce que** le guide longitudinal (7) est limité par une paroi arrière (13), et par des parois latérales (14) faisant saillie à partir de la paroi arrière (13), le poussoir (8) étant situé complètement dans le guide longitudinal (7), en particulier vu par rapport à son étendue transversalement à la direction longitudinale (L), et l'une des parois latérales (14) comprenant une ouverture de passage (15) pour le passage du câble tracteur (4).

9. Ensemble à câbles Bowden selon la revendication 8, **caractérisé en ce que** le guide longitudinal (7) est limité par une plaque de fermeture (36) par rapport à la paroi arrière (13).

10. Ensemble à câbles Bowden selon l'une des revendications précédentes 6 et 7 ou selon l'une des revendications précédentes 8 et 9 lorsqu'elle dépend de l'une des revendications 6 et 7, **caractérisé en ce qu'**une cavité (16) se raccorde au guide longitudinal (7), le poussoir (8) pénétrant par son point d'articulation (10) dans la cavité (16) et y étant en liaison avec le levier pivotant (6), la glissière de guidage (12) du levier pivotant (6) étant située de préférence dans ladite cavité (16).

11. Ensemble à câbles Bowden selon l'une des revendications précédentes 6, 7 et 10 ou selon l'une des revendications précédentes 8 et 9 lorsqu'elle dépend de l'une des revendications 6 et 7, **caractérisé en ce que** le levier pivotant (6) est disposé de manière décalée de la glissière de guidage (12) et du poussoir (8), en particulier de telle sorte qu'un espace intermédiaire (17) pour le logement de parties d'une paroi latérale d'une armoire (18) soit obtenu entre la glissière de guidage (12) et le poussoir (8).

12. Ensemble à câbles Bowden selon l'une des revendications précédentes 6, 7, 10 et 11 ou selon l'une des revendications précédentes 8 et 9 lorsqu'elle dépend de l'une des revendications 6 et 7, **caractérisé en ce que** l'actionneur de câble Bowden (1) comprend un élément pivotant (19) en liaison de manière solidaire en rotation avec le levier pivotant (6), lequel élément pivotant comprend la glissière de guidage (12) et est en liaison avec le point d'articulation (10) du poussoir (8).

13. Ensemble à câbles Bowden selon la revendication 12, **caractérisé en ce que** l'actionneur de câble Bowden (1) comprend en outre un élément cache (20), lequel est disposé dans la région du levier pivotant (6), l'élément pivotant (19) traversant, par une partie d'axe (21), une ouverture (22) dans l'élément cache (20).

14. Ensemble de soupape d'évacuation comportant un ensemble à câbles Bowden selon l'une des revendications précédentes et une soupape d'évacuation (23) dotée d'un clapet de soupape (31), le deuxième câble Bowden (2b) agissant sur le clapet de soupape (31).

15. Armoire inférieure (18) pour un lavabo, comportant au moins une paroi latérale (32) dotée d'un évidement (34) tourné vers l'espace intérieur (33) de l'armoire inférieure (18), l'armoire inférieure comportant en outre un ensemble à câbles Bowden selon l'une des revendications précédentes 4 à 14, l'actionneur de câble Bowden étant introduit dans l'évidement, et le levier pivotant (6) étant disposé du côté extérieur.
